# FASCICULE DE BREVET EUROPEEN

(11) **EP 0 965 037 B1**
(45) Date de publication et mention de la délivrance du brevet: **02.02.2005**
(21) Numéro de dépôt: 98913830.0
(22) Date de dépôt: 04.03.1998
(51) Int. Cl.: G01N 25/72

(54) **PROCEDE ET DISPOSITIF D'EXAMEN PHOTOTHERMIQUE D'UN MATERIAU**
VERFAHREN UND VORRICHTUNG ZUR PHOTOMETRISCHEN UNTERSUCHUNG EINES MATERIALS
METHOD AND DEVICE FOR THE INSPECTION OF A MATERIAL BY THERMAL IMAGING

(30) Priorité: 05.03.1997 FR 9702620
(43) Date de publication de la demande: 22.12.1999
(73) Titulaire: Framatome ANP, 92400 Courbevoie (FR); OFFICE NATIONAL D'ETUDES ET DE RECHERCHES AEROSPATIALES (ONERA), 92320 Chatillon sous Bagneux (FR)
(72) Inventeur: LEGRANDJACQUES, Laurent, F-21000 Dijon (FR); DEHAN, Christophe, F-78280 GUYANCOURT (FR); KRAPEZ, Jean-Claude, F-92320 Châtillon (FR); LE POUTRE, François, F-91640 Janvry (FR)
(74) Mandataire: Bouget, Lucien
(86) Numéro de dépôt international: PCT/FR1998/000429
(87) Numéro de publication internationale: WO 1998/039640

(56) Documents cités:
- WO-A-87/00632
- US-A- 4 707 605
- US-A- 4 965 451

## Description

L'invention concerne un procédé et un dispositif d'examen photothermique d'un matériau.

On connaît des procédés et des dispositifs d'examen photothermique permettant par exemple d'assurer le contrôle non destructif de pièces, pour détecter des défauts, des variations de nature ou de propriétés du matériau de la pièce ou des différences d'épaisseur d'une couche de revêtement de la pièce. Ces procédés et dispositifs peuvent être également utilisés pour caractériser des variations locales de diffusivité ou de conductivité thermique à la surface ou sous la surface d'une pièce constituée du matériau. La pièce dont on réalise l'examen peut être métallique et constituée d'un matériau ferreux, par exemple un acier allié tel qu'un acier inoxydable, ou encore d'un matériau non ferreux. Le matériau peut être également un matériau composite, une céramique ou une matière plastique.

Le procédé d'examen photothermique qui est réalisé sur une pièce ou échantillon en matériau dont on effectue l'examen utilise le phénomène de diffusion d'une perturbation thermique produite par un échauffement local de la pièce ou échantillon. L'étude et la caractérisation de la diffusion de la chaleur et de ses variations à la surface de la pièce permettent de détecter ou de caractériser la pièce par la détection de variations locales de diffusion thermique.

De manière habituelle, le dispositif utilisé ou caméra photothermique comprend un laser qui est focalisé sur la surface de la pièce ou échantillon dont on réalise l'examen, dans une zone de chauffage. Le flux infrarouge rayonné par la pièce dans une zone de détection voisine de la zone de chauffage permet de mesurer ou d'évaluer l'élévation de température dans la zone de détection, due au chauffage dans la zone de chauffage. Le décalage entre la zone de chauffage et la zone de détection est généralement appelé "offset". Le flux rayonné ou l'élévation de température peut être mesuré sans contact en utilisant un détecteur tel qu'un détecteur infrarouge. Le flux thermique rayonné ou l'élévation de température dans la zone de détection est influencé par les caractéristiques locales des matériaux inspectés. En particulier, la diffusion de la chaleur entre la zone de chauffage et la zone de détection qui est à l'origine de l'élévation de température dans la zone de détection dépend des défauts du matériau, tels que des fissures, au niveau de la zone de chauffage ou de la zone de détection ou au voisinage de ces deux zones.

Afin de réaliser un contrôle non destructif de la pièce constituée du matériau ou de réaliser des mesures de diffusion thermique dans le matériau, on réalise un balayage d'une surface de la pièce ou échantillon, en déplaçant, à la surface de la pièce ou échantillon, un moyen d'apport de chaleur qui est généralement constitué par un faisceau laser focalisé sur une portion de la surface de la pièce constituant une zone de chauffage.

L'élévation de température ou le flux thermique rayonné sont déterminés dans une zone de détection dont la position varie avec la position de la zone de chauffage, lors du balayage, les zones de chauffage et de détection étant séparées par une distance constituant l'offset.

On peut ainsi obtenir une image bidimensionnelle de la surface de l'échantillon représentative des variations de diffusion de la chaleur dans l'échantillon ou encore des défauts présents à l'intérieur de l'échantillon. Le balayage peut être obtenu en utilisant une pièce fixe et en déplaçant sur la surface de la pièce, le moyen d'apport de chaleur de façon synchrone avec la zone de détection ; généralement, on réalise le balayage par la déflexion d'un faisceau laser focalisé sur la surface, en utilisant des miroirs orientables motorisés qui sont également utilisés pour envoyer le flux rayonné par la zone de détection vers un détecteur permettant la mesure d'élévation de température tel qu'un détecteur infrarouge.

Il est également possible de déplacer la pièce dont on réalise l'inspection en regard d'un dispositif fixe de chauffage et de détection.

Le balayage de la surface de la pièce est généralement réalisé en déplaçant ligne par ligne sur la surface, un couple de zones de chauffage et de détection de type ponctuel, les zones de chauffage et de détection ayant par exemple des formes circulaires et des dimensions faibles. Comme indiqué plus haut, une zone de chauffage sensiblement ponctuelle peut être obtenue par focalisation d'un faisceau laser au moyen de lentilles sphériques sur la surface de la pièce ou échantillon. De même, le rayonnement infrarouge émis dans une zone de détection de faibles dimensions voisine de la zone de chauffage est transmis à un monodétecteur infrarouge sous la forme d'un faisceau qui est focalisé sur la surface sensible du détecteur qui est généralement de forme rectangulaire et de petites dimensions.

On ajuste le décalage entre la zone de chauffage et la zone de détection, appelé offset, par un réglage mécanique fin de la position du détecteur infrarouge ou de son optique de focalisation, dans un plan parallèle à la surface de la pièce dont on réalise l'examen.

Un tel procédé ou dispositif utilisant des zones de chauffage et de détection de type ponctuel présente certains inconvénients.

Ce procédé et ce dispositif peuvent être adaptés assez facilement à des matériaux peu conducteurs du point de vue thermique et très absorbants ou émissifs d'un point de vue optique. En effet, les sources laser mises en oeuvre dans le cas de la thermographie active ont des puissances variant du milliwatt à quelques watts. Ces puissances sont insuffisantes dans le cas de matériaux qui ne présentent pas les caractéristiques mentionnées ci-dessus et en particulier dans le cas de la plupart des métaux.

Ces procédés et dispositifs ont par ailleurs une faible productivité de mesure du fait qu'il est nécessaire d'effectuer un balayage complet de la surface de la pièce ou échantillon en déplaçant les zones ponctuelles de chauffage et de détection.

La portion de surface correspondant à la zone de détection et les vitesses de balayage à mettre en oeuvre pour obtenir des signaux mesurables sont généralement trop faibles pour que les mesures effectuées présentent un véritable intérêt économique, en particulier dans le cas de l'examen des métaux et dans le cas de tout matériau dans lequel les gradients de diffusivité qu'on cherche à déterminer sont faibles, par exemple du fait qu'ils sont dus à des défauts de petites tailles.

Le réglage de l'offset entre les zones de chauffage et de détection qui doit être obtenu par un positionnement et un réglage fins des éléments optiques de chauffage et de détection ou du détecteur peut être long et délicat à mettre en oeuvre. Ce réglage doit être revu de façon périodique lorsqu'on souhaite obtenir une bonne reproductibilité des performances de l'examen. En particulier, il est pratiquement nécessaire de travailler à offset constant, ce qui interdit toute possibilité d'optimisation du signal enregistré et de travailler à offset nul si l'on souhaite réaliser un double balayage de la pièce pour éliminer l'effet de l'état de surface de cette pièce ; on doit également limiter le balayage à une seule direction duf ait que l'offset doit être parallèle à la direction de déplacement de la zone de chauffage et de la zone de détection.

Le dispositif d'examen peut présenter également un encombrement important du fait de la dimension de la source laser nécessaire, ce qui interdit l'utilisation de dispositifs pour le contrôle de pièces sur site, lorsque les surfaces de ces pièces sont difficiles d'accès.

Les systèmes optiques de chauffage et de détection utilisés habituellement permettent d'obtenir des "profondeurs de champ" de quelques millimètres au mieux, ces "profondeurs de champ" étant constituées par des intervalles de variation de la distance entre le dispositif d'examen et la surface de la pièce dans lesquels il est possible d'obtenir des performances garanties du dispositif d'examen. Cette faible profondeur de champ rend impossible l'inspection de pièces qui ne présentent pas des surfaces rigoureusement planes, ce qui est le cas de la plupart des pièces auxquelles peut s'appliquer le contrôle thermographique.

On a proposé, dans le cas d'un examen thermographique, d'utiliser plusieurs détecteurs opérant en parallèle, éventuellement sous la forme d'un réseau (WO 8700632). Cependant, cette utilisation d'un ensemble de détecteurs ne permet pas en elle-même d'éliminer les inconvénients rappelés plus haut de la méthode d'examen thermographique d'un matériau.

Le but de l'invention est donc de proposer un procédé d'examen photothermiqué d'un matériau, consistant à réaliser le chauffage d'une zone de chauffage à la surface d'une pièce constituée du matériau, par un moyen d'apport de chaleur et la détection d'un flux rayonné par la surface de la pièce dans une zone de détection à une certaine distance de la zone de chauffage, et le déplacement relatif de la zone de chauffage et de la zone détection à la surface de la pièce suivant une trajectoire de balayage définie, ce procédé permettant d'éviter les inconvénients des procédés de l'art antérieur qui ont été décrits ci-dessus.

Dans ce but, pour la détection du flux rayonné par la zone de détection dont la position varie avec la position de la zone de chauffage, on sélectionne, par des moyens électroniques, parmi un ensemble de détecteurs constitué par une matrice de détecteurs ayant la forme d'un réseau carré ou rectangulaire comportant des lignes et des colonnes de détecteurs, un groupe de détecteurs constitué d'au moins une partie d'une ligne, colonne ou diagonale d'inclinaison appropriée de l'ensemble de détecteurs dont la position est choisie de manière à recevoir un flux rayonné par la zone de détection de la surface de la pièce et à augmenter le rapport signal / bruit de l'examen photothermique, et on utilise des moyens électroniques d'exploitation des signaux tels que les signaux de chacun des détecteurs du groupe de détecteurs peuvent être traités de façon indépendante.

Afin de bien faire comprendre l'invention, on va maintenant décrire, à titre d'exemples, plusieurs modes de réalisation d'un procédé et d'un dispositif d'examen photothermique selon l'invention, de manière comparative avec un procédé et un dispositif d'examen phtotothermique selon la technique connue.
La figure 1 est une vue en perspective schématique d'une pièce en un matériau sur lequel on effectue un examen photothermique.
La figure 2 est une représentation schématique d'un dispositif d'examen tel qu'une caméra photothermique.
La figure 3 est un schéma montrant la mise en oeuvre d'un procédé d'examen photothermique selon l'art antérieur avec un balayage d'une surface d'une pièce par des zones de type ponctuel.
La figure 4 est une vue schématique analogue à la vue de la figure 3 relative à la mise en oeuvre du procédé d'examen photothermique suivant l'invention.
Les figures 5A et 5V sont des vues schématiques relatives à la mise en oeuvre du procédé de l'invention, avec réglage de l'offset entre les zones de chauffage et de détection.
Les figures 6A, 6B et 6C sont relatives à la mise en oeuvre du procédé suivant l'invention par balayage de la surface d'une pièce avec réglage de l'offset entre les zones de chauffage et de mesure en fonction du sens de balayage.
Les figures 7A et 7B sont relatives à la mise en oeuvre du procédé de l'invention avec un offset entre des zones de chauffage et de mesure ponctuelles ayant une direction différente de la direction du balayage.
La figure 8 est relative à la mise en oeuvre du procédé de l'invention avec un balayage oblique et l'utilisation d'une ligne oblique de détecteurs de la matrice de détecteurs.
Les figures 9A, 9B, 9C, 9D et 9E sont relatives à la mise en oeuvre du procédé de l'invention en mode ponctuel avec réglage de l'offset entre les zones ponctuelles de chauffage et de détection, en direction, amplitude et signe.
La figure 10 est une vue d'un dispositif suivant l'invention permettant de réaliser un chauffage de la pièce à examiner dans une zone de forme allongée.
La figure 11 présente un montage optique pour réaliser l'alignement des flux de chauffage et de détection dans un dispositif suivant l'invention.
La figure 12 est une représentation schématique d'un dispositif permettant de régler la focalisation d'un faisceau de chauffage d'une pièce et du flux détecté, pendant le balayage de la pièce.
La figure 13 est une représentation schématique d'un dispositif à balayage interne pour réaliser le contrôle de pièces maintenues en position fixe.
Les figures 14A et 14B sont des représentations schématiques de dispositifs suivant l'invention dans lesquels le balayage est réalisé par déplacement de la pièce à examiner.
La figure 15 est une représentation schématique d'un dispositif suivant l'invention à balayage interne et externe pour le contrôle de pièces à géométrie quelconque.
La figure 16 est une représentation schématique d'un dispositif suivant l'invention à balayage interne et externe pour le contrôle de pièces fixes de révolution.
Les figures 17A et 17B sont des représentations schématiques de dispositifs suivant l'invention à balayage interne et externe équipés de moyens de déplacement de pièces à examiner.
Les figures 18A et 18B sont relatives à la mise en oeuvre du procédé suivant l'invention avec une seule barrette de détecteurs.

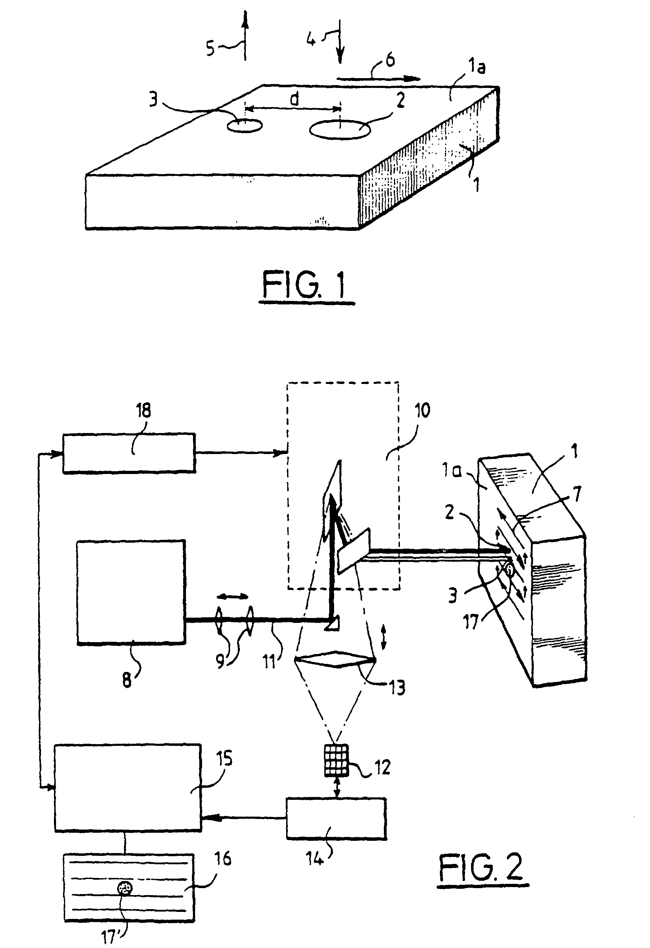

Sur la figure 1, on a représenté une pièce 1 constituée d'un matériau dont on veut réaliser l'examen photothermique dont la forme générale est parallélépipédique rectangle et qui comporte une surface plane 1a sur laquelle on réalise le chauffage du matériau de la pièce 1 dans une zone 2 de la surface 1 a par apport de chaleur, par exemple sous la forme d'un faisceau laser, comme représenté schématiquement par la flèche 4. En utilisant un détecteur, on détecte le flux rayonné par une zone de détection 3 de la surface 1a, comme représenté schématiquement par la flèche 5. La zone de chauffage 2 et la zone de détection 3 sont décalées l'une par rapport à l'autre sur la surface 1a et séparées par une distance d appelée offset.

Pour réaliser l'examen de la pièce 1, on effectue un balayage de la surface 1a, en déplaçant la zone de chauffage 2 et la zone de détection 3 de manière synchrone, sur la surface 1a, comme indiqué par la flèche 6 parallèlement ou non au décalage entre la zone de chauffage et la zone de détection. Le balayage est réalisé ligne par ligne, le sens du déplacement étant inversé pour chacune des lignes successives (configuration "créneau") ou identique (configuration "peigne").

Sur la figure 2, on a représenté de manière schématique un dispositif d'examen photothermique de la pièce 1, avec balayage de la surface la de la pièce suivant des lignes de balayage successives, comme représenté à titre d'exemple dans la configuration "créneau" par les flèches 7, sur la face 1a de la pièce 1.

Le dispositif comporte une source laser 8 associée à des lentilles de focalisation 9 et à un système de balayage 10 constitué par des miroirs pivotants motorisés.

Les lentilles de focalisation 9 permettent de focaliser le faisceau laser 11 provenant de la source laser 8 sur la surface 1a de la pièce 1, au niveau de la zone de chauffage 2. Le système de balayage 10, constitué par les miroirs pivotants motorisés, permet de déplacer la zone de chauffage 2 suivant la trajectoire de balayage 7 sur la surface 1a de la pièce 1. De plus, le système de balayage permet de faire parvenir, à chaque instant, à un monodétecteur infrarouge 12, par l'intermédiaire d'un système optique de collecte et de focalisation infrarouge 13, le rayonnement infrarouge émis par une zone de détection 3, qui peut être légèrement décalée par rapport à la zone de chauffage 2.

En sortie du monodétecteur infrarouge 12, les signaux produits par le monodétecteur représentatifs du rayonnement infrarouge émis par la zone de détection sont amplifiés par un amplificateur 14 puis transmis à une unité 15 d'acquisition et de synchronisation des signaux et de construction d'une image représentant les variations des propriétés thermiques locales de la surface 1a.

L'image élaborée par l'unité 15 est affichée sur un écran 16. Dans le cas de la présence d'un défaut 17 ou d'une variation de propriétés thermiques dans le matériau de la pièce 1, le défaut 17 est rendu visible en 17' sur l'écran 16 du dispositif photothermique ou caméra photothermique.

L'unité 15 est reliée à une unité 18 de pilotage du système de balayage 10 de manière à réaliser la synchronisation du système de balayage avec le système d'acquisition des signaux.

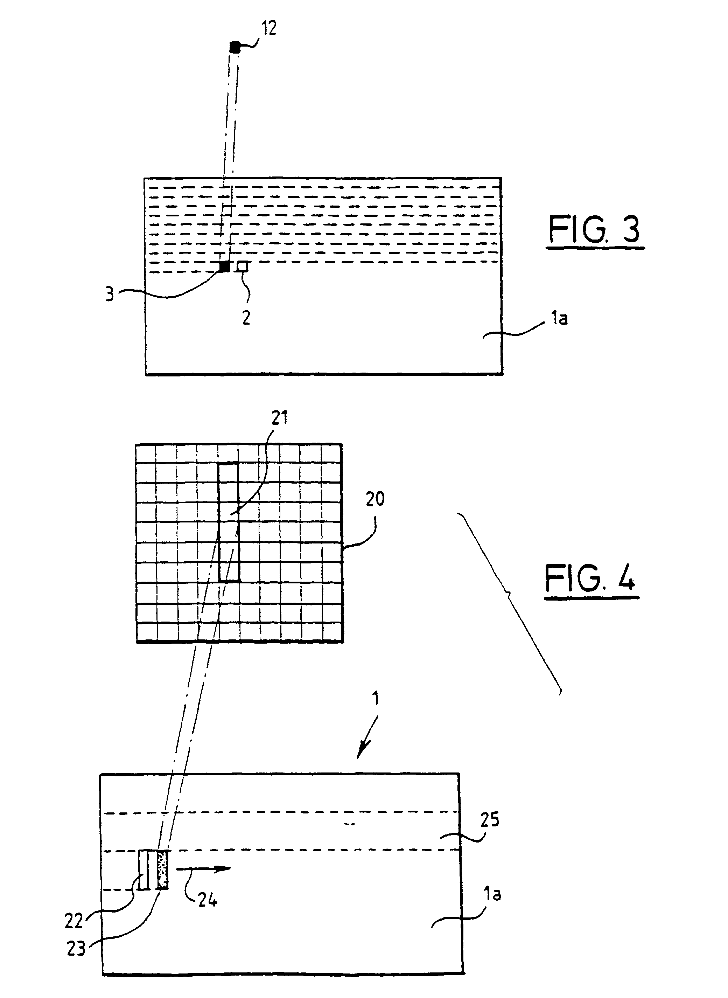

Sur la figure 3, on a représenté de manière schématique la surface 1 a de la pièce sur laquelle on réalise un balayage par déplacement d'une zone ponctuelle de chauffage 2 correspondant à la zone de focalisation d'un faisceau laser et d'une zone de détection ponctuelle 3 dont le rayonnement infrarouge est détecté par le monodétecteur 12.

Comme il est visible sur la figure 3, on réalise un balayage ligne par ligne de manière à couvrir la totalité de la surface 1a de la pièce au cours du balayage. Pour chacune des positions des zones de chauffage 2 et de détection 3, on réalise l'acquisition d'un pixel de l'image photothermique de la surface 1a. Comme indiqué plus haut, on obtient, dans ce cas qui correspond aux dispositions suivant l'art antérieur, une très faible productivité de la mesure du fait qu'il est nécessaire d'effectuer un balayage complet de la surface 1a de la pièce à inspecter et que les vitesses de balayage pour obtenir des signaux acceptables en sortie du monodétecteur 12 peuvent être limitées.

En outre, l'offset, c'est-à-dire le décalage entre les zones 2 et 3, doit être réglé de manière précise avant de commencer l'examen de la surface 1a par un réglage mécanique fin de la position du détecteur 12 ou du système optique 13 dans un plan parallèle à la surface 1a. L'offset entre les zones 2 et 3 ne peut pas être réglé en cours d'examen et adapté pour obtenir des signaux les plus caractéristiques possible des variations des propriétés thermiques qu'on cherche à enregistrer.

Sur la figure 4, on a représenté de manière schématique un exemple de mise en oeuvre d'un procédé suivant l'invention.

Le procédé suivant l'invention est mis en oeuvre pour réaliser l'examen thermographique d'une surface 1a d'une pièce en un matériau sur lequel on effectue un contrôle non destructif ou une mesure de propriétés thermiques.

A la différence de l'exemple de mise en oeuvre d'un procédé d'examen thermographique suivant l'art antérieur représenté sur la figure 3, on utilise, pour réaliser la détection d'un rayonnement émis par une zone de détection de la surface 1a, au lieu d'un monodétecteur tel que le monodétecteur 12 représenté sur la figure 3, une matrice de détecteurs 20, c'est-à-dire un ensemble de détecteurs infrarouges unitaires dont la surface sensible a la forme d'un carré ou d'un rectangle de petites dimensions, disposés suivant un réseau à mailles orthogonales présentant N colonnes et M lignes.

Le nombre de colonnes N et le nombre de lignes M de la matrice 20 peuvent être compris entre 1 et plusieurs centaines (par exemple 512). Les nombres peuvent être fixés indépendamment l'un de l'autre.

Le procédé suivant l'invention consiste, comme dans le cas des procédés selon l'art antérieur, à déplacer, sur la surface 1a de la pièce dont on réalise l'examen, une zone de chauffage 22 et une zone de détection 23, de manière à balayer l'ensemble de la surface 1a et à capter et mesurer le rayonnement émis par la zone de détection 23 à l'aide de détecteurs infrarouges.

Il est connu, comme indiqué plus haut, de réaliser la détection en utilisant un monodétecteur et des zones de chauffage et de détection de type ponctuel. Il est connu également d'utiliser une matrice complète de détecteurs pour observer l'évolution de la température sur la surface complète d'une pièce soumise à une source de chaleur.

Par rapport à ces procédés connus, le procédé de l'invention réalise un balayage de la surface 1a de la pièce par des zones de chauffage 22 et de détection 23 et la détection du rayonnement émis par la zone de détection 23 se déplaçant à la surface de la pièce 1a par un groupe de détecteurs 21 juxtaposés de la matrice de détecteurs 20.

Dans le cas du mode de réalisation représenté sur la figure 4, le groupe 21 de détecteurs juxtaposés de la matrice de détecteurs 20 constitue une partie d'une colonne de cette matrice de détecteurs 20 comportant n détecteurs juxtaposés. Comme il sera expliqué plus loin, la position de la colonne de détecteurs est soigneusement choisie à l'intérieur de la matrice 20, pour réaliser la détection dans des conditions idéales.

L'ensemble de détecteurs choisis peut être dis-posé aussi bien suivant une colonne, une ligne ou une diagonale de pente quelconque.

Les signaux de chacun des détecteurs qui ont été choisis peuvent être traités de façon indépendante.

Du fait de l'utilisation d'un ensemble de détecteurs, il est possible d'utiliser des zones de chauffage 22 et de détection 23 allongées et non plus ponctuelles. Ces zones allongées 22 et 23 couvrent une certaine longueur de la surface de l'échantillon 1a qui correspond à l'image fournie par exploitation des signaux des détecteurs, sous la forme de n pixels.

Le balayage de la surface 1a par les zones 22 et 23 allongées, comme schématisé par la flèche 24, permet de couvrir, à chacun des déplacements dans le sens de la flèche 24 suivant la longueur de la surface 1a, une bande 25 de la surface dont la largeur correspond à n pixels de l'image. On peut ainsi réaliser un balayage complet de la surface 1a de la pièce par bandes successives 25 dont l'aire peut être plusieurs centaines de fois plus grande que l'aire d'une ligne de balayage lorsqu'on utilise une zone ponctuelle 2, 3 et un monodétecteur 12.

La longueur du groupe 21 de détecteurs de la matrice 20 assurant la détection du rayonnement émis par la zone de détection 23 est choisie en fonction des caractéristiques de la pièce dont on réalise l'examen. On choisira une longueur de la ligne de détecteurs 21 importante, dans le cas d'une pièce de grandes dimensions et une longueur plus réduite dans le cas d'une pièce de petites dimensions ou ayant une géométrie compliquée.

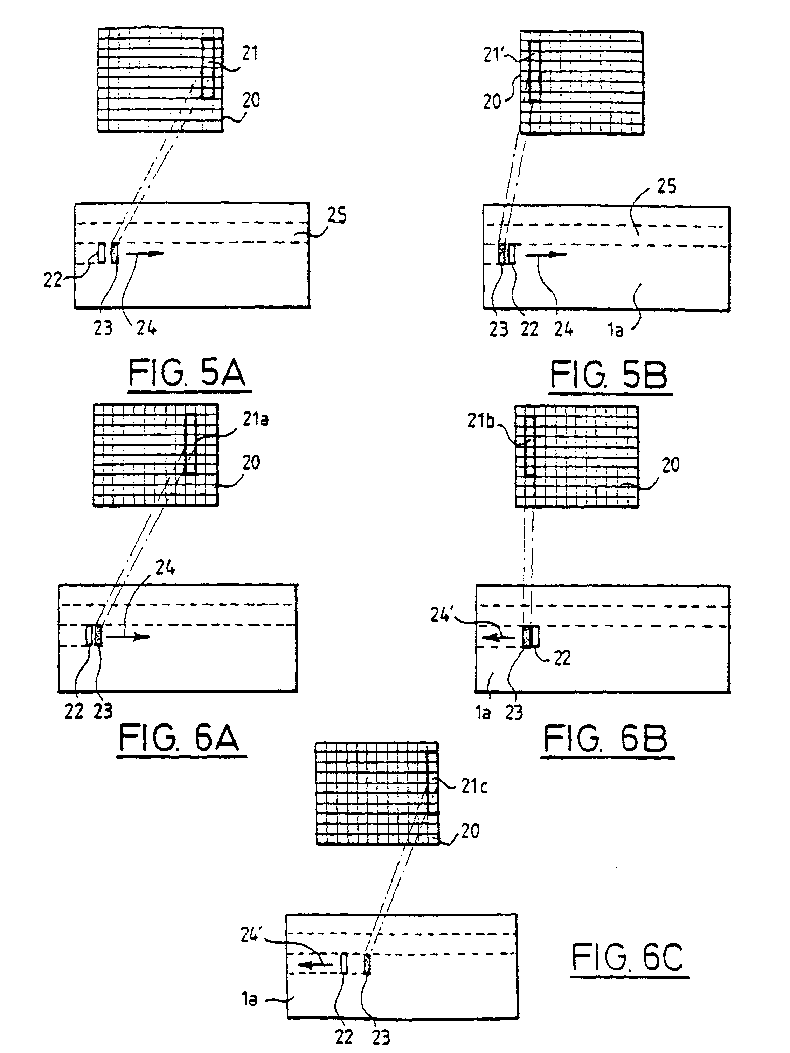

Sur les figures 5A et 5B, on a représenté de manière schématique deux variantes d'utilisation du procédé suivant l'invention, de manière à régler l'offset entre la zone de chauffage 22 et la zone de détection 23, c'est-à-dire la distance séparant ces deux zones dans la direction de la ligne ou bande de balayage 25, sans avoir à effectuer de réglage mécanique du moyen d'apport de chaleur, du moyen de détection, ou de leurs optiques.

Sur la figure 5A, pour réaliser la détection du rayonnement émis par la zone 23, on utilise une première colonne de détecteurs 21 de la matrice de détecteurs 20, de sorte que le décalage entre les zones 22 et 23 présente une première valeur positive en prenant comme sens positif le sens de la flèche 24.

Sur la figure 5B, on a montré qu'en utilisant une seconde colonne de détecteurs 21' distincte de la colonne 21 dans la matrice de détecteurs 20, on fixe le décalage entre les zones 22 et 23 à une valeur différente et négative en prenant comme sens positif le sens de la flèche 24.

Il est donc possible par un simple réglage électronique ou "logiciel" du dispositif de détection, d'optimiser de façon instantanée le réglage du décalage de façon à obtenir te meilleur rapport signal/bruit possible, lors des réglages effectués avant l'inspection d'une pièce ou d'une série de pièces.

Comme il est visible sur les figures 6A, 6B et 6C, il est également possible de mettre en oeuvre un procédé à double balayage de la surface 1a, c'est-à-dire un procédé dans lequel on réalise successivement le balayage de chacune des bandes 25 dans un premier sens (sens de la flèche 24) et dans un second sens opposé (sens de la flèche 24').

Un tel procédé à double balayage, qui fait l'ob-jet d'une demande de brevet déposée le même jour que la présente demande de brevet, permet par soustraction point à point des signaux ou des images obtenues par thermographie pour le premier et le second sens de balayage, respectivement, d'éliminer les variations d'émissivité ou d'absorptivité de la surface 1a risquant de masquer les variations de la diffusion thermique dans le matériau de la pièce, sur lesquelles repose l'examen ou le contrôle photothermique de la pièce.

Sur la figure 6A, on voit que le choix d'une première colonne de détecteurs 21a de la matrice de détecteurs 20 permet de fixer l'offset entre les zones 22 et 23 à une première valeur, lors du déplacement des zones 22 et 23 dans le sens de la flèche 24 ou sens aller du balayage.

Comme il est visible sur la figure 6B, il est possible, lors du déplacement des zones 22 et 23 dans le second sens de déplacement donné par la flèche 24', correspondant au sens de retour du balayage, de fixer l'offset à une valeur identique en amplitude et en signe à la valeur lors du déplacement dans le sens de l'aller, en choisissant une seconde colonne de détecteurs 21b dans la matrice de détecteurs 20. Une telle modification de l'offset entre les trajets aller et retour a pour objet de parfaire l'élimination des informations inopportunes ou d'augmenter le rapport signal/bruit de l'inspection.

Comme il est visible sur la figure 6C, lors du déplacement dans le sens du retour 24', il est possible de modifier à la fois l'amplitude et le signe du décalage entre l'aller et le retour, en choisissant une troisième colonne de détecteurs 21c de la matrice de détecteurs 20.

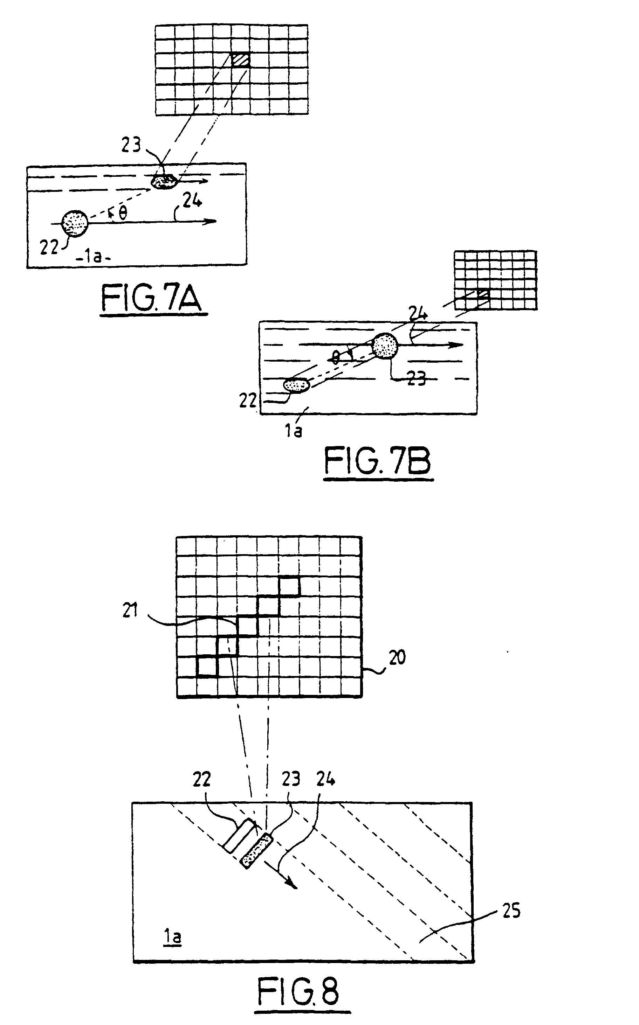

Comme il est visible sur les figures 7A et 7B, il est possible, en utilisant le procédé de l'invention, en choisissant un détecteur particulier de la matrice de détecteurs, de réaliser l'examen de la surface 1a de la pièce en mode ponctuel, c'est-à-dire de telle manière que la zone de détection 23 corresponde à un seul pixel de l'image thermographique obtenue par balayage de la surface. Un pixel correspond à un élément de la matrice.

L'utilisation d'une matrice de détecteurs et le choix d'un détecteur particulier dans la matrice de détecteurs permet de réaliser, comme il est visible sur les figures 7A et 7B, le balayage suivant la direction 24 avec une zone de détection 23 placée de manière telle que l'offset entre les zones 22 et 23 soit porté par une direction faisant un angle θ avec la direction de balayage 24. Ce mode de réalisation dé l'examen thermographique qui n'est pas possible dans le cas de l'utilisation d'un monodétecteur permet d'améliorer l'image thermographique, lorsque la surface 1a de la pièce présente un état de surface rendant moins efficace la méthode de contrôle par double balayage.

Comme il est visible sur la figure 8, il est possible de modifier la direction de l'axe de balayage 24 et donc la direction des bandes 25 à la surface de la pièce 1a et de choisir un groupe de détecteurs 21 de la matrice de détecteurs 20 constitué de détecteurs définissant des rangées rectilignes disposées de façon tout à fait quelconque sur la matrice de détecteurs. La direction du balayage peut être fixée ou modifiée à tout instant pour être établie dans une direction quelconque de la surface 1a. On peut ainsi effectuer un réglage d'orientation de la direction de balayage avec une latitude de 360°.

Ce réglage ou cette modification de la direction de balayage peut être réalisé aussi bien dans le cas d'un fonctionnement en mode ligne, c'est-à-dire avec des zones de chauffage et de détection 22 et 23 allongées et en utilisant une ligne de détecteurs, qu'en mode ponctuel, c'est-à-dire avec des zones de chauffage et de détection correspondant à un seul pixel de l'image thermographique.

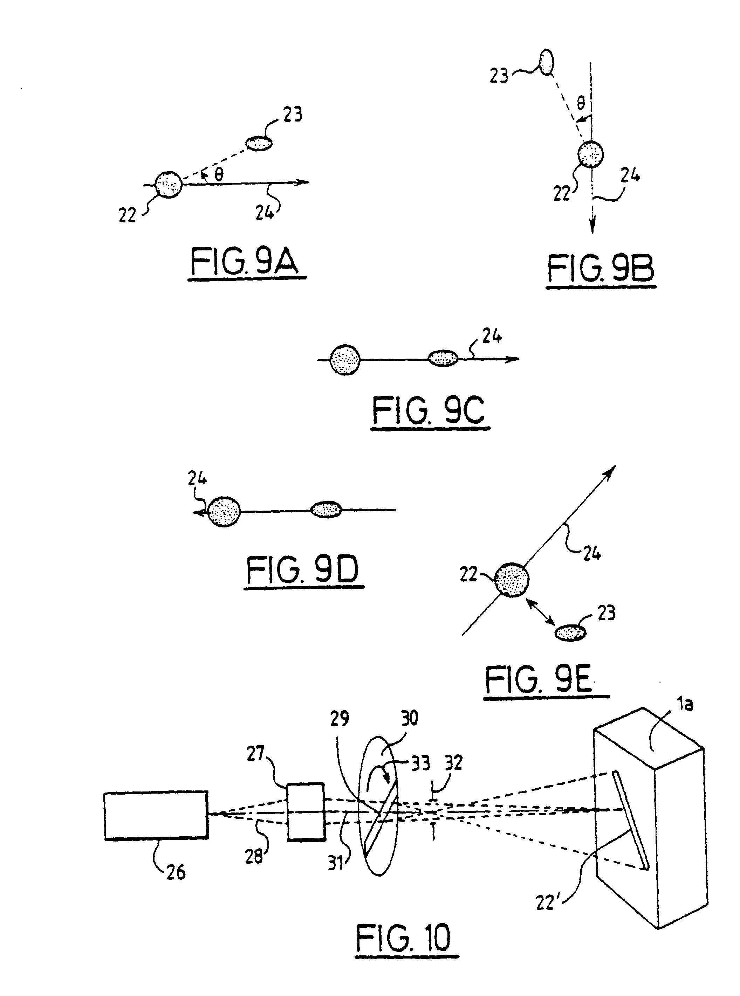

Sur les figures 9A à 9E, on a représenté diverses possibilités de réglage de la direction de balayage 24 de la surface de la pièce et de l'offset entre les zones de chauffage 22 et de détection 23, dans le cas d'un fonctionnement en mode ponctuel.

Comme il est visible sur les figures 9A et 9B, les zones ponctuelles 22 et 23 peuvent être alignées suivant une direction faisant un angle θ avec la direction de balayage. Dans ce cas, l'offset peut être réglé en direction et en amplitude.

Comme il est visible sur les figures 9C et 9D, l'offset peut être dirigé dans le sens du balayage donné par la flèche 24 ou dans le sens inverse.

Comme il est visible sur la figure 9E, les zones ponctuelles 22 et 23 peuvent être alignées suivant une direction pratiquement perpendiculaire à la direction de balayage 24.

Dans tous les cas, l'offset peut être également réglé en amplitude en plus du réglage en direction.

Le procédé suivant l'invention du fait de l'utilisation d'une matrice de détecteurs et d'un balayage d'une surface de la pièce à examiner permet donc de disposer de nombreux moyens pour améliorer le rapport signal/bruit, que l'examen soit réalisé en mode ligne ou en mode ponctuel, en balayage simple ou en balayage double. Ces moyens sont en particulier le réglage de l'offset entre les zones de chauffage et de détection, en signe, en valeur et en direction angulaire.

Comme indiqué plus haut, le procédé suivant l'invention permet également de réaliser l'examen en mettant en oeuvre une distribution de l'intensité du laser de chauffage différente d'une zone de type gaussien circulaire. Le procédé et le dispositif suivant l'invention mettant en oeuvre une matrice de détecteurs et un balayage de la surface permet de mettre en oeuvre une zone de chauffage de type linéaire ayant par exemple la forme d'une ligne ou d'une ellipse. On peut également mettre en oeuvre une zone de chauffage de forme annulaire.

Sur la figure 10, on a représenté schématiquement un dispositif permettant de réaliser un balayage de la surface 1a de la pièce ou échantillon avec une zone de chauffage 22' ayant la forme d'une ellipse allongée.

Le dispositif comporte une source laser 26, des moyens optiques de focalisation 27 du faisceau laser 28, des moyens optiques de formation d'une zone linéaire 29 recevant le rayonnement laser, sur un support 30 qui peut être orienté de 180° autour de l'axe optique 31 du dispositif et un diaphragme 32 de réglage d'ouverture.

Les moyens optiques 27 de focalisation et de formation de la ligne 29 sur le support 30 peuvent être montés sur des supports distincts et, dans ce cas, le support du moyen optique de focalisation 27 est maintenu fixe alors que le support des moyens de formation de la ligne 29 est monté mobile en rotation, comme indiqué par la flèche 33. Ils peuvent être montés également sur un support commun qui est alors monté mobile en rotation autour de l'axe optique 31.

On peut ainsi orienter la zone de chauffage linéaire 22' dans une direction quelconque autour de l'axe 31, cette direction étant choisie en fonction de la direction du balayage de la surface 1a.

On peut également, grâce au diaphragme 32, régler la longueur de la zone de chauffage 22', depuis la valeur nulle jusqu'à une valeur maximale déterminée par l'ouverture maximale du diaphragme 32.

En réglant la longueur de la zone de chauffage 22' à une valeur sensiblement égale à la largeur de cette ligne de chauffage, on peut réaliser un examen en mode ponctuel. Pour augmenter la densité de puissance du chauffage, dans le cas d'un fonctionnement en mode ponctuel, il est possible de supprimer les moyens optiques de formation de la ligne 29. Bien entendu, les moyens de réglage d'orientation de la ligne 29 et de réglage de l'ouverture du diaphragme peuvent être motorisés.

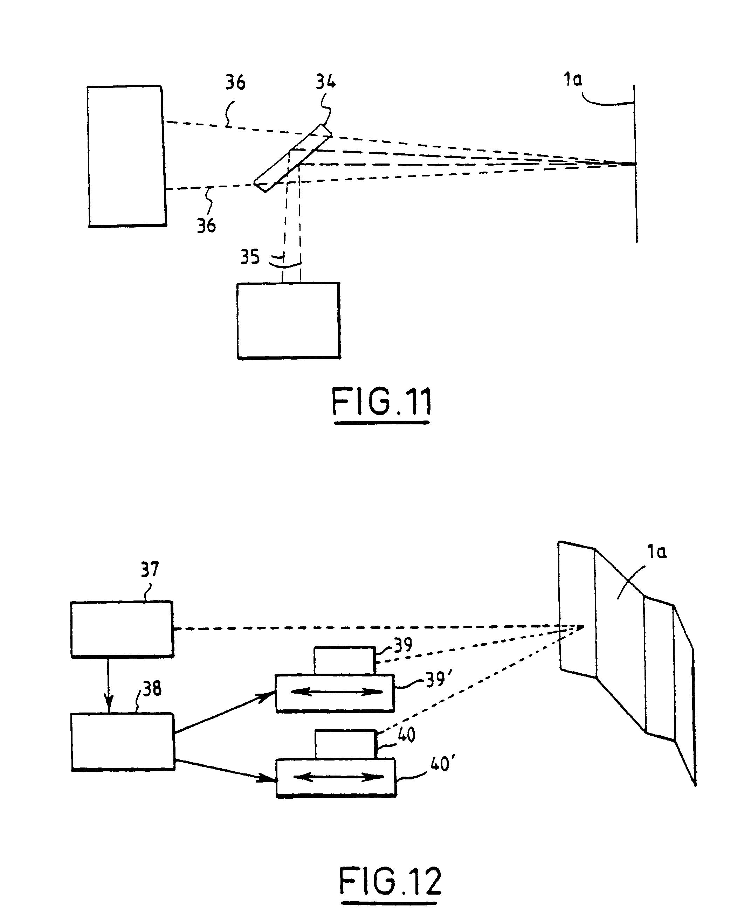

Sur la figure 11, on a représenté un montage optique permettant de transmettre le faisceau de chauffage 35 et de récupérer le faisceau de détection 36 sur la surface de l'échantillon 1a, avec un très bon rendement et de manière que les faisceaux soient colinéaires sur la partie de leur trajet optique qui intercepte la pièce à inspecter.

Le dispositif comporte une lame semi-réfléchissante ou lame dichroïque 34 qui est interposée sur le chemin du faisceau de chauffage 35 provenant d'une source laser, de manière à renvoyer ce faisceau sur la surface 1a de la pièce à examiner, avec un coefficient de réflexion élevé. La lame dichroïque 34 permet également de transmettre, avec un coefficient de transmission élevé, le flux infrarouge 36 ou faisceau de détection émis par la surface de l'échantillon 1a, les faisceaux 35 et 36 ayant un chemin optique commun entre la surface 1a de la pièce ou échantillon et la lame dichroïque 34.

La lame dichroïque pourrait aussi transmettre le rayon laser et réfléchir le flux IR de détection. Dans ce cas, la disposition du laser et la disposition du détecteur sont inversées.

Lorsque la pièce 1 présente une forme complexe, la surface 1a de cette pièce sur laquelle on réalise le balayage peut présenter des zones successives dont la distance aux moyens optiques de chauffage et de détection peut varier de manière importante. Dans ce cas, pendant le balayage, il est nécessaire de faire varier le réglage ou la position des dispositifs de chauffage et de détection.

Sur la figure 12, on a représenté un dispositif comportant des moyens d'asservissement de la position des moyens optiques de chauffage ou d'excitation 39 et des moyens optiques de détection 40 de la distance entre la zone de la surface 1a dans laquelle on réalise le balayage et ces moyens optiques. La mesure de distance est réalisée par un mesureur 37 qui peut être un télémètre, un interféromètre ou un capteur de distance par triangulation. L'axe optique du mesureur de distance 37 est rendu colinéaire à l'axe optique de l'optique d'excitation 39 et à l'axe optique des moyens de détection 40.

L'information concernant la distance mesurée par le mesureur de distance 37 est transmise à des moyens électroniques d'asservissement 38 assurant la commande d'une platine 39' de déplacement des moyens optiques d'excitation 39 et d'une platine 40' de déplacement des moyens de détection infrarouge 40.

L'asservissement de la focalisation des moyens optiques de chauffage 39 et des moyens de détection 40 peut être réalisé en temps réel, c'est-à-dire que pour chacune des positions des zones de chauffage et de mesure, une mesure de distance est effectuée par le mesureur de distance 37 qui est transcrite en ordre de positionnement pour assurer le déplacement en temps réel des moyens de chauffage 39 et de détection 40 par les platines de déplacement correspondante 39' et 40'. Cet asservissement peut être également effectué en temps différé, une topologie de la surface 1a de la pièce étant enregistrée lors d'un premier balayage ne mettant en oeuvre que le mesureur de distance 37. L'information obtenue lors du premier balayage est mise en mémoire et utilisée par les platines 39' et 40' lors d'un second balayage au cours duquel on réalise l'examen thermographique.

Dans le cas d'un asservissement de la focalisation en temps réel, l'alignement du faisceau du mesureur de distance sur les axes optiques des moyens de chauffage 39 et de détection 40 se fait par l'intermédiaire d'une lame dichroïque installée à demeure sur le passage des faisceaux. Dans le cas où la mesure est réalisée en temps différé, l'alignement est réalisé par un simple miroir qui est placé sur le trajet du faisceau de mesure pendant le premier balayage permettant le relevé topographique de la surface 1a, ce miroir étant ensuite enlevé pendant la mesure thermographique.

L'asservissement de position des moyens optiques de chauffage et de détection peut également être réalisé sur la base d'une information théorique concernant la forme de la surface 1a de la pièce, par exemple sous la forme de données de CAO.

Le procédé et le dispositif suivant l'invention qui ont été décrits plus haut ont principalement pour intérêt de permettre de réaliser l'examen de matériaux de natures tout à fait diverses et présentant en particulier des propriétés thermiques très différentes. Le procédé et le dispositif d'examen suivant l'invention s'appliquent également à des pièces présentant des états de surface quelconques et donc des propriétés d'absorptivité et d'émissivité présentant de grandes variations sur les surfaces dont on réalise l'examen.

Dans la mise en oeuvre du procédé suivant l'invention en mode ponctuel, les zones de chauffage peuvent présenter une forme sensiblement carrée ou rectangulaire ou encore des formes circulaire ou annulaire. Dans ce cas, le côté du carré ou le diamètre de la zone circulaire présente une longueur L qui peut être comprise entre 20 µm et 10 mm.

L'offset entre la zone de chauffage et la zone de détection peut aller de -5L à +5L dans une direction définie par un angle de 0 à 360° par rapport à la direction de balayage. La vitesse de déplacement des zones de chauffage et de détection pendant le balayage peut être comprise entre 0,1 et 100 mm/s. La longueur de la ligne de balayage peut être comprise entre L et 50 mm. La densité de puissance apportée au matériau inspecté peut être de l'ordre de 0,1 à 200 W/mm², en fonction de l'absorptivité optique, de la diffusivité thermique du matériau et de la vitesse de balayage.

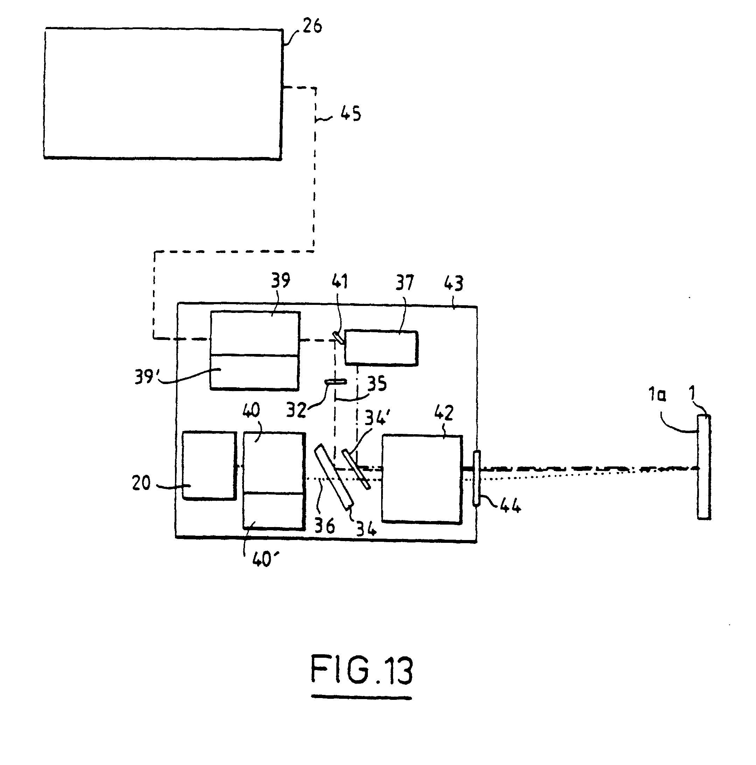

Sur les figures 13, 14A, 14B, 15, 16, 17A et 17B on a représenté, à titre d'exemples, différents modes de réalisation d'un dispositif permettant de mettre en oeuvre le procédé suivant l'invention.

Les éléments correspondants sur l'ensemble des figures portent les mêmes repères.

De manière générale, les dispositifs comportent les éléments suivants :
- une source de rayonnement laser 26,
- des moyens optiques de chauffage 39 associés à la source laser et des moyens de déplacement 39' de ces moyens de chauffage 39,
- une matrice de détecteurs 20,
- des moyens optiques de détection infrarouges 40 et des moyens 40' de déplacement de ces moyens optiques infrarouges,
- un mesureur de distance 37,
- une lame dichroïque 34 et un miroir escamotable 34',
- un diaphragme 32,
- un miroir de renvoi 41 du faisceau de chauffage.

Le faisceau de chauffage est désigné par le repère 35 et le faisceau de détection par le repère 36.

Le coffre 43 muni d'un hublot transparent de sortie 44 permet de protéger une partie au moins du dispositif optique.

Dans le cas de la figure 13, la source de rayonnement laser 26 est disposée à l'extérieur du coffret 43 et reliée aux moyens optiques de chauffage 39 par l'intermédiaire d'une fibre optique 45.

Le balayage de la surface 1a de l'échantillon 1 suivant deux directions perpendiculaires X et Y est réalisé par un ensemble de miroirs pivotants 42 pilotés par une électronique de commande.

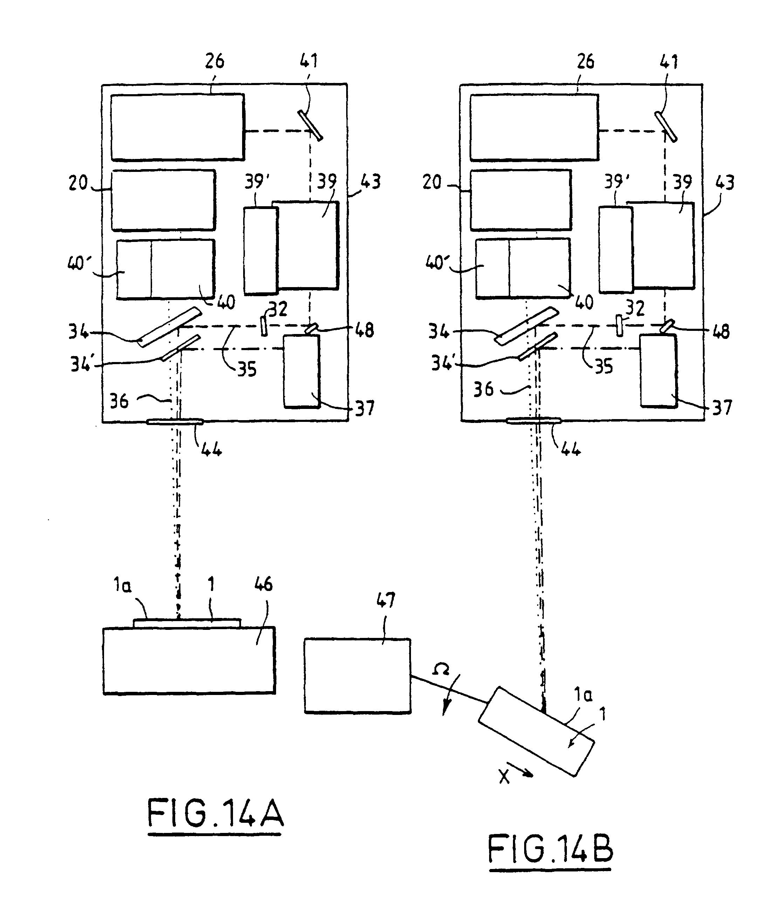

Dans le cas des dispositifs représentés sur les figures 14A et 14B, le balayage de la surface 1a de l'échantillon 1 est réalisé par une platine 46 ou 47 de déplacement de l'échantillon, l'ensemble du dispositif optique placé à l'intérieur du coffret 43 étant totalement fixe et envoyant à la surface 1a de l'échantillon un faisceau de chauffage 35 et recueillant un faisceau de détection 36 de direction fixe.

Dans le cas de la figure 14A, la surface 1a de l'échantillon est sensiblement plane et la platine 46 réalise un déplacement de l'échantillon 1 et de sa surface 1a suivant deux directions X et Y perpendiculaires entre elles et parallèles à la surface 1a de l'échantillon.

Dans le cas du dispositif de la figure 14B, la surface 1a de l'échantillon est sensiblement cylindrique et la platine 47 réalise un déplacement de l'échantillon en rotation Ω autour de l'axe de la surface cylindrique 1a et en translation dans la direction X des génératrices de la surface 1a, pour réaliser le balayage.

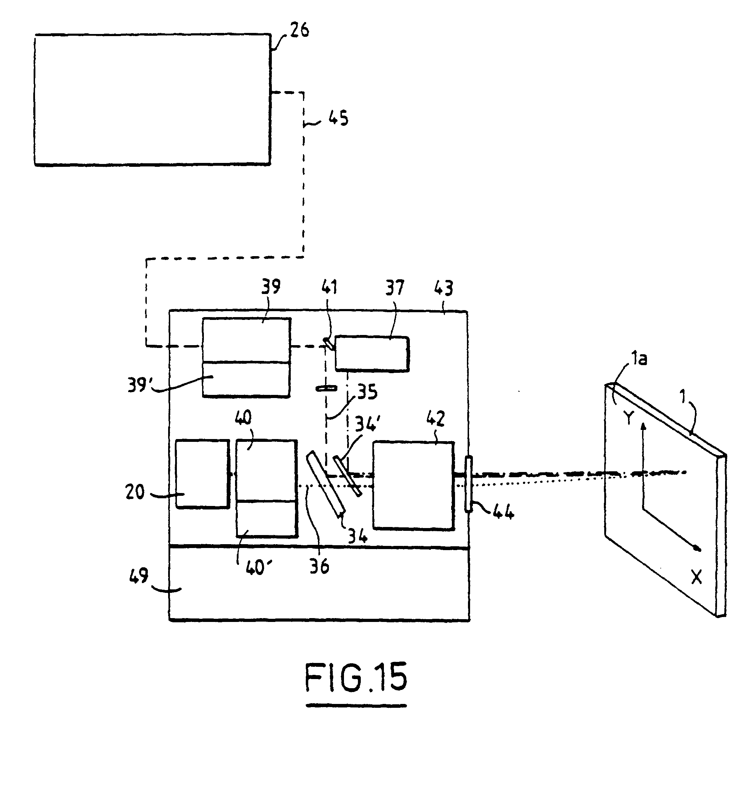

Dans le cas de la figure 15, la source de rayonnement 26 est disposée à l'extérieur du coffret 43 et reliée aux moyens optiques de chauffage 39 par l'intermédiaire d'une fibre optique 45.

Le coffret 43 renferme un ensemble de miroirs pivotants asservis 42 dont le pilotage est assuré par une électronique de commande et qui permet le déplacement des faisceaux 35 et 36 dans une première direction X de la surface 1a de l'échantillon.

Le coffret 43 est monté sur une platine 49 permettant le déplacement du coffret 43 et des faisceaux 35 et 36 parallèlement à une direction Y de la surface 1a de l'échantillon perpendiculaire à la direction X.

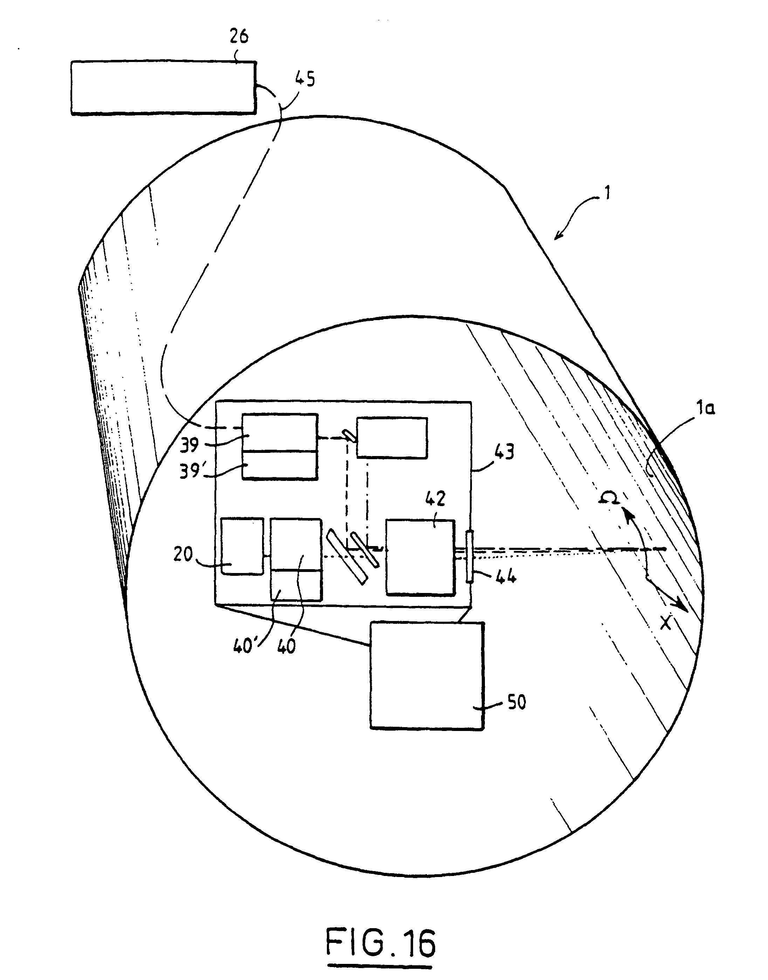

Sur la figure 16, on a représenté un dispositif permettant de réaliser l'examen de la surface intérieure 1a d'une pièce tubulaire 1.

L'ensemble des moyens optiques est disposé à l'intérieur du coffret 43 comportant un hublot transparent 44, à l'exception de la source de rayonnement laser, qui est reliée par l'intermédiaire d'une fibre optique 45 aux moyens optiques de chauffage 39 placés à l'intérieur du coffret 43.

Le coffret 43 est monté sur une platine 50 permettant son déplacement en rotation autour de l'axe de la pièce tubulaire 1 pour réaliser le balayage de la surface intérieure 1a de la pièce 1 en combinaison avec un ensemble de miroirs asservis 42 pilotés par une électronique de commande de manière à déplacer les faisceaux 36 dans la direction X des génératrices de la surface intérieure 1a de la pièce 1.

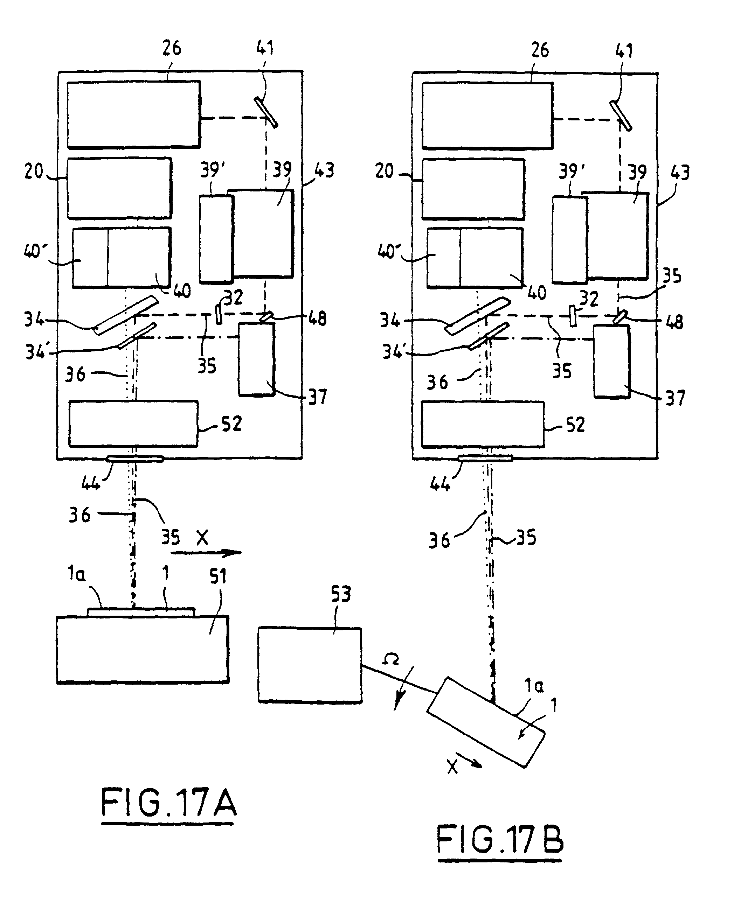

Sur les figures 17A et 17B, on a représenté deux dispositifs dont l'ensemble des éléments optiques est disposé à l'intérieur du coffret 43 comportant un hublot de sortie transparent 44. Le coffret 43 est fixe et contient un ensemble à miroirs asservis 52 permettant de déplacer les faisceaux 35 et 36 dans une direction X de la surface 1a de l'échantillon 1, pour réaliser le balayage.

Dans le cas du dispositif représenté sur la figure 17A, une platine 51 permet de déplacer l'échantillon 1a dans une direction Y perpendiculaire à la direction X.

Dans le cas du dispositif représenté sur la figure 17B, la pièce ou échantillon 1 présente une forme cylindrique et une platine 53 permet de faire pivoter la pièce 1 autour de son axe, pour réaliser le balayage selon Ω en combinaison avec le système à miroirs asservis 52 déplaçant les faisceaux 35 et 36 dans la direction X qui est parallèle aux génératrices de la surface cylindrique 1a de la pièce 1.

Bien qu'un élément caractéristique du procédé et du dispositif suivant l'invention soit constitué par l'utilisation d'une matrice de détecteurs, dans certains cas, la matrice de détecteurs peut se réduire à un simple alignement de détecteurs constituant une barrette de détecteurs.

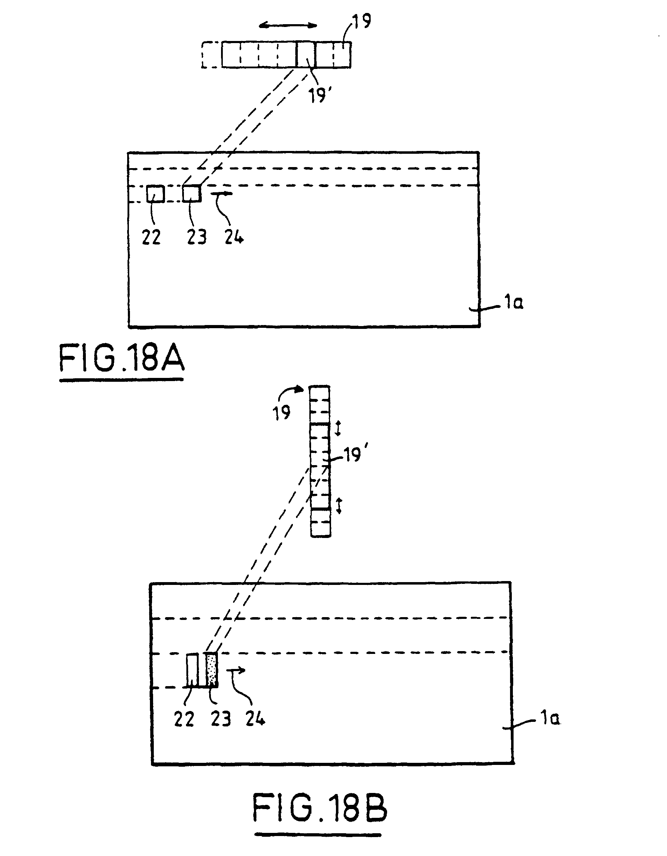

Sur la figure 18A on a représenté un premier mode de réalisation d'un dispositif simplifié comportant une simple barrette de détecteurs 19, au lieu d'une matrice de détecteurs 20.

Dans ce cas, on peut réaliser un examen de la surface 1a de la pièce en mode ponctuel, les zones de chauffage 22 et de détection 23 étant réalisées sous forme ponctuelle et fournissant, dans chacune de leurs positions successives, un pixel de l'image provenant d'un détecteur 19' de la barrette de détecteurs 19 dans une position particulière dont le choix permet de régler le décalage entre les zones 22 et 23, lors d'un balayage par lignes schématisé par la flèche 24. Dans ce cas, on ne peut réaliser le balayage que dans une seule direction et le décalage entre les zones de chauffage 22 et de détection 23 peut être réglé dans cette direction en choisissant le détecteur 19' de la barrette de détecteurs 19 placée parallèlement aux lignes de balayage.

Sur la figure 18B, on a représenté la surface 1a d'une pièce dont on réalise l'examen thermographique en mode ligne, en utilisant une barrette de détecteurs 19. Les zones de chauffage 22 et de détection 23 ont une forme allongée et la détection est réalisée à partir d'une ligne de détecteurs 19' choisie sur la barrette de détecteurs 19 placée perpendiculairement à la direction de balayage 24.

Dans ce cas, il est possible de régler la longueur de la ligne correspondant aux zones 22 et 23 en réglant la longueur de la ligne de détecteurs 19' choisie dans la barrette de détecteurs 19. Mais il n'est alors pas possible de régler l'amplitude ou le signe du décalage entre les zones de chauffage 22 et de détection 23.

Le procédé et le dispositif suivant l'invention permettent donc d'obtenir des images thermographiques de surfaces de pièce de forme quelconque avec une durée d'exécution réduite, ce qui rend le procédé applicable à des pièces ayant des surfaces importantes.

En outre, le procédé et le dispositif suivant l'invention permettent d'adapter le décalage entre la zone de chauffage et la zone de détection et la distribution spatiale du laser, de manière à obtenir, en fonction des caractéristiques géométriques ou physiques de la pièce ou de la présence de défauts dans cette pièce, un rapport signal/bruit le plus favorable possible.

Le procédé et le dispositif selon l'invention peuvent être adaptés à des pièces ayant des surfaces de forme quelconque.

L'invention s'applique de manière générale à l'examen thermographique de toute pièce quel que soit le matériau constitutif de cette pièce.

## Revendications

1. Procédé d'examen photothermique d'un matériau, consistant à réaliser le chauffage d'une zone de chauffage (2, 22) à la surface (1a) d'une pièce (1) constituée du matériau, par un moyen d'apport de chaleur (11, 35) et la détection d'un flux (36) rayonné par la surface (1a) de la pièce (1) dans une zone de détection (3, 23) à une certaine distance de la zone de chauffage (2, 22), et le déplacement relatif de la zone de chauffage (2, 22) et de la zone de détection (3, 23) à la surface (1a) de la pièce (1) suivant une trajectoire de balayage définie, **caractérisé par le fait que**, pour la détection du flux (36) rayonné par la zone de détection (3, 23) dont la position varie avec la position de la zone de chauffage (2, 22), on sélectionne, par des moyens électroniques, parmi un ensemble de détecteurs (19, 20) constitué par une matrice de détecteurs ayant la forme d'un réseau carré ou rectangulaire comportant des lignes et des colonnes de détecteurs, un groupe (21) de détecteurs constitué d'au moins une partie d'une ligne, colonne ou diagonale d'inclinaison appropriée de l'ensemble de détecteurs (20) dont la position est choisie de manière à recevoir un flux rayonné par la zone de détection (3, 23) de la surface (1a) de la pièce (1) et à augmenter le rapport signal / bruit de l'examen photothermique, et on utilise des moyens (15, 16) électroniques d'exploitation des signaux tels que les signaux de chacun des détecteurs du groupe de détecteurs (21) peuvent être traités de façon indépendante.

2. Procédé selon la revendication 1, **caractérisé par le fait que** la zone de chauffage (22) et la zone de détection (23) ont la forme de lignes et sont déplacées, lors du balayage, dans une direction (24) qui leur est perpendiculaire.

3. Procédé suivant l'une quelconque des revendications 1 et 2, **caractérisé par le fait que** le décalage entre la zone de chauffage (22) et la zone de détection (23) dans la direction de balayage (24) est réglé en choisissant au moins un détecteur dans une barrette de détecteurs (19) ou une rangée de détecteurs (21) dans une matrice de détecteurs (20).

4. Procédé selon la revendication 3, **caractérisé par le fait qu'**on règle la valeur et le signe du décalage entre la zone de chauffage (22) et la zone de détection (23) de façon électronique.

5. Procédé suivant la revendication 1, **caractérisé par le fait que** la longueur de la zone de détection (23) est réglée de façon électronique en choisissant le nombre de détecteurs du groupe (21) des détecteurs.

6. Procédé selon l'une quelconque des revendications 3 et 4, dans lequel le balayage est réalisé suivant des lignes de balayage (25), dans un premier sens, puis dans un second sens opposé au premier, pour chacune des lignes de balayage (25) et que le décalage entre la zone de chauffage (22) et la zone de détection (23) est réglé par le choix d'un premier détecteur ou d'une première rangée de détecteurs (21a) pendant le balayage dans le premier sens de balayage et par le choix d'un second détecteur ou d'une seconde rangée de détecteurs (21b) lors du déplacement des zones de chauffage(22) et de détection (23) dans le second sens de balayage.

7. Procédé suivant la revendication 6, **caractérisé par le fait qu'**on modifie la valeur et le signe du décalage entre la zone de chauffage (22) et la zone de détection (23) entre deux déplacements de balayage dans des sens différents.

8. Procédé suivant l'une quelconque des revendications 1 à 7, **caractérisé par le fait que** le décalage entre la zone de chauffage (22) et la zone de détection (23) est dans une direction faisant un angle θ avec la direction de balayage (24), l'angle θ étant compris entre 0° et 360°.

9. Procédé suivant l'une quelconque des revendications 1 à 8, **caractérisé par le fait qu'**on déplace les zones de chauffage (22) ou de détection (23), lors du balayage, dans une direction non parallèle à des lignes ou des colonnes de l'ensemble de détecteurs constituant une matrice (20) et qu'on choisit des détecteurs adjacents de la matrice de détecteurs (20), placés suivant des colonnes et des lignes différentes de la matrice de détecteurs (20).

10. Procédé suivant l'une quelconque des revendications 1 à 9, **caractérisé par le fait que** le moyen d'apport de chaleur à la surface (1a) de l'échantillon est un faisceau laser (35) et qu'on règle la focalisation du faisceau laser (35) et d'un faisceau (36) rayonné par la surface (1a) de la pièce dans la zone de détection (23) par des moyens optiques de chauffage (39) et de détection (40), en fonction d'une mesure de la distance entre les moyens optiques de chauffage (39) et de détection (40) et la zone de détection (23) de la surface (1a) de la pièce (1) dans laquelle on réalise l'examen optique, pendant le balayage.

11. Dispositif d'examen photothermique d'un matériau comportant un moyen de chauffage (26) d'une zone de chauffage (22) de la surface (1a) d'une pièce (1) constituée du matériau, des moyens de détection (20) d'un flux (36) rayonné par la surface (1a) de la pièce (1) dans une zone de détection (23), des moyens de balayage (10, 42, 46, 47, 49, 50, 51, 52, 53) pour le déplacement de la zone de chauffage (2, 22) et de la zone de détection (3, 23) suivant toute la surface (1a) de la pièce (1), ainsi que des moyens (15, 16) électroniques d'exploitation de signaux des moyens de détection (20) du flux rayonné permettant de construire une image thermographique de la surface (1a) de la pièce (1), **caractérisé par le fait que** les moyens de détection des signaux sont constitués par un groupe (21) de détecteurs choisis dans un ensemble de détecteurs constituant une matrice (20) ou une barrette (19) de détecteurs et que les moyens (15, 16) électroniques d'exploitation des signaux sont tels que les signaux de chacun des détecteurs du groupe de détecteurs (21) peuvent être traités de façon indépendante.

12. Dispositif suivant la revendication 11, dans lequel le moyen de chauffage (26) de la zone de chauffage (22) est une source de rayonnement laser associée à des moyens optiques (39) permettant de réaliser la focalisation du faisceau laser (35) provenant de la source de rayonnement (26) sur la surface (1a) de la pièce (1) et le flux rayonné par la zone de détection (23) de la surface (1a) de la pièce est un rayonnement infrarouge dont la focalisation est assurée par des moyens de focalisation (13, 40), **caractérisé par le fait qu'**il comporte de plus un mesureur (37) de la distance entre les moyens optiques (9, 39) de focalisation du faisceau laser et la surface (1a) de la pièce (1) et de la distance entre les moyens de focalisation (13, 40) du rayonnement infrarouge et la surface (1a) de la pièce (1), et des moyens d'asservissement en temps réel des moyens optiques de focalisation aux mesures de distance.

13. Dispositif suivant l'une quelconque des revendications 11 et 12, dans lequel le moyen de chauffage (26) de la zone de chauffage (22) est une source de rayonnement laser associée à des moyens optiques (39) permettant de réaliser la focalisation du faisceau laser (35) provenant de la source de rayonnement (26) sur la surface (1a) de la pièce (1) et le flux rayonné par la zone de détection (23) de la surface (1a) de la pièce est un rayonnement infrarouge dont la focalisation est assurée par des moyens de focalisation (13, 40), **caractérisé par le fait qu'**il comporte de plus un mesureur (37) de la distance entre les moyens optiques (39) de focalisation du faisceau laser et la surface (1a) de la pièce (1) et de la distance entre les moyens de focalisation (13, 40) du rayonnement infrarouge et la surface (1a) de la pièce (1), et des moyens de mise en mémoire des distances mesurées par le mesureur (37) pendant le balayage de la surface (1a) de la pièce (1) et de commande des moyens de focalisation en temps différé à partir des distances mises en mémoire.

14. Dispositif suivant l'une quelconque des revendications 11 à 13, **caractérisé par le fait que** les moyens de balayage comportent des moyens optiques et des moyens de déplacement mécanique (46, 47, 51, 53) de la pièce 1.

15. Dispositif suivant l'une quelconque des revendications 11 à 13, **caractérisé par le fait que** les moyens de balayage comportent à la fois des moyens optiques (42, 52) et des moyens de déplacement mécanique (49, 50) de moyens d'émission d'un faisceau de chauffage (35) de la surface (1a) de la pièce et de réception d'un faisceau (36) rayonné par une zone de détection (3, 23) de la surface (1a) de la pièce (1).

16. Dispositif suivant l'une quelconque des revendications 11 à 13, **caractérisé par le fait qu'**il comporte une lame semi-réfléchissante (34) pour défléchir un faisceau de chauffage (35) vers la surface (1a) de la pièce (1) et transmettre un faisceau (36) rayonné par la zone de détection (3, 23) de la surface (1a) de l'échantillon vers les moyens de détection (19, 20).

17. Dispositif suivant l'une quelconque des revendications 11 à 16, dans lequel le moyen de chauffage est une source de rayonnement (26) associée à des moyens optiques de focalisation (27), **caractérisé par le fait que** les moyens optiques de focalisation (27) sont prévus pour étaler le rayonnement de la source (26) suivant une ligne ou ellipse allongée (29) et que des moyens (30, 32) sont prévus pour régler la longueur et l'orientation de la ligne ou ellipse allongée (29).

18. Dispositif suivant l'une quelconque des revendications 12 à 17, **caractérisé par le fait que** la source de rayonnement (26) est reliée aux moyens optiques de focalisation (39) par une fibre optique (45).

## Claims

1. Method for photothermal examination of a material, consisting of the heating of a heating area (2, 22) on the surface (1a) of a piece (1) formed from the material, using a means of supplying heat (11, 35), and the detection of a flux (36) radiated by the surface (1a) of the piece (1) in a detection area (3, 23) at a certain distance from the heating area (2, 22), and the relative movement of the heating area (2, 22) and the detection area (3, 23) on the surface (1a) of the piece (1) along a specified scanning trajectory, **characterized in that**, in order to detect the flux (36) radiated by the detection area (3, 23) whose position varies with the position of the heating area (2, 22), electronic means are used to select, from a set of detectors (19, 20) consisting of a matrix of detectors in the form of a square or rectangular network comprising rows and columns of detectors, a group (21) of detectors consisting of at least part of a row, column or appropriately inclined diagonal of the set of detectors (20) whose position is chosen in such a way as to receive a flux radiated by the detection area (3, 23) of the surface (1a) of the part (1) and to increase the signal/noise ratio of the photothermal examination, while use is also made of electronic signal processing means (15, 16) such that the signals from each of the detectors of the group of detectors (21) can be processed independently.

2. Method according to Claim 1, **characterized in that** the heating area (22) and the detection area (23) are in the form of lines and are moved during scanning in a direction (24) perpendicular to them.

3. Method according to either of Claims 1 and 2, **characterized in that** the displacement between the heating area (22) and the detection area (23) in the scanning direction (24) is adjusted by choosing at least one detector from a strip of detectors (19) or a line of detectors (21) in a matrix of detectors (20).

4. Method according to Claim 3, **characterized in that** the value and sign of the displacement between the heating area (22) and the detection area (23) are adjusted electronically.

5. Method according to Claim 1, **characterized in that** the length of the detection area (23) is adjusted electronically by choosing the number of detectors in the group (21) of detectors.

6. Method according to either of Claims 3 and 4, in which the scanning is carried out along scanning lines (25) in a first direction, and then in a second direction opposite to the first, for each of the scanning lines (25), and the displacement between the heating area (22) and the detection area (23) is adjusted by the choice of a first detector or a first line of detectors (21a) during the scanning in the first scanning direction and by the choice of a second detector or a second line of detectors (21b) during the movement of the heating area (22) and detection area (23) in the second scanning direction.

7. Method according to Claim 6, **characterized in that** the value and sign of the displacement between the heating area (22) and the detection area (23) is modified between two scanning movements in different directions.

8. Method according to any one of Claims 1 to 7, **characterized in that** the displacement between the heating area (22) and the detection area (23) is in a direction forming an angle θ with the scanning direction (24), the angle θ being in the range from 0° to 360°.

9. Method according to any one of Claims 1 to 8, **characterized in that** the heating area (22) and/or the detection area (23) is moved during scanning in a direction which is not parallel to rows or columns of the set of detectors forming a matrix (20), and **in that** adjacent detectors are selected in the matrix of detectors (20), these detectors being placed in different columns and rows of the matrix of detectors (20).

10. Method according to any one of Claims 1 to 9, **characterized in that** the means of supplying heat to the surface (1a) of the test piece is a laser beam (35) and **in that** the focusing of the laser beam (35) and of a beam (36) radiated by the surface (1a) of the piece in the detection area (23) is adjusted by optical heating means (39) and optical detection means (40), as a function of the measurement of the distance between the optical heating means (39) and detection means (40) and the detection area (23) of the surface (1a) of the piece (1) in which the optical examination is carried out, during the scanning.

11. Device for photothermal examination of-a material, comprising a means (26) of heating a heating area (22) of the surface (1a) of a piece (1) formed from the material, means (20) of detecting a flux (36) radiated by the surface (1a) of the piece (1) in a detection area (23), scanning means (10, 42, 46, 47, 49, 50, 51, 52, 53) for moving the heating area (2, 22) and the detection area (3, 23) over the whole surface (1a) of the piece (1), and electronic means (15, 16) for processing the signals from the radiated flux detection means (20), enabling a thermographic image of the surface (1a) of the piece (1) to be constructed, **characterized in that** the signal detection means consist of a group (21) of detectors chosen from a set of detectors forming a matrix (20) or a strip (19) of detectors, and **in that** the electronic signal processing means (15, 16) are such that the signals from each of the detectors of the group of detectors (21) can be processed independently.

12. Device according to Claim 11, in which the means (26) of heating the heating area (22) is a laser radiation source associated with optical means (39) for focusing the laser beam (35) emitted by the radiation source (26) on the surface (1a) of the piece (1), and the flux radiated by the detection area (23) of the surface (1a) of the piece is an infrared radiation which is focused by focusing means (13, 40), **characterized in that** it additionally comprises a device (37) for measuring the distance between the optical means (9, 39) for focusing the laser beam and the surface (1a) of the piece (1), and for measuring the distance between the means (13, 40) for focusing the infrared radiation and the surface (1a) of the piece (1), and means for controlling the optical focusing means in real time in accordance with the measurements of distance.

13. Device according to either of Claims 11 and 12, in which the means (26) of heating the heating area (22) is a laser radiation source associated with optical means (39) for focusing the laser beam (35) emitted by the radiation source (26) on the surface (1a) of the piece (1), and the flux radiated by the detection area (23) of the surface (1a) of the piece is an infrared radiation which is focused by focusing means (13, 40), **characterized in that** it additionally comprises a device (37) for measuring the distance between the optical means (39) for focusing the laser beam and the surface (1a) of the piece (1), and for measuring the distance between the means (13, 40) for focusing the infrared radiation and the surface (1a) of the piece (1), and means for storing the distances measured by the measuring device (37) during the scanning of the surface (1a) of the piece (1) and means for controlling the focusing means in batch mode on the basis of the stored distances.

14. Device according to any one of Claims.11 to 13, **characterized in that** the scanning means comprise optical means and mechanical means (46, 47, 51, 53) for moving the piece 1.

15. Device according to any one of Claims 11 to 13, **characterized in that** the scanning means comprise both optical means (42, 52) and mechanical means (49, 50) for moving means for emitting a heating beam (35) towards the surface (1a) of the piece and for receiving a beam (36) radiated by a detection area (3, 23) of the surface (1a) of the piece (1).

16. Device according to any one of Claims 11 to 13, **characterized in that** it comprises a semireflecting plate (34) for deflecting a heating beam (35) towards the surface (1a) of the piece (1) and for transmitting a beam (36) radiated by the detection area (3, 23) of the surface (1a) of the test piece towards the detection means (19, 20).

17. Device according to any one of Claims 11 to 16, in which the heating means is a radiation source (26) associated with optical focusing means (27), **characterized in that** the optical focusing means (27) are designed to spread the radiation from the source (26) along a line or elongated ellipse (29) and **in that** means (30, 32) are provided to adjust the length and orientation of the line or elongated ellipse (29).

18. Device according to any one of Claims 12 to 17, **characterized in that** the radiation source (26) is connected to the optical focusing means (39) by an optical fibre (45).

## Patentansprüche

1. Verfahren zur photothermischen Untersuchung eines Materials, das darin besteht, einen Heizbereich (2, 22) auf der Oberfläche (1a) eines aus dem Material bestehenden Teils (1) durch ein Wärmezufuhrmittel (11, 35) zu erhitzen und in einem Erfassungsbereich (3, 23) in einem bestimmten Abstand zum Heizbereich (2, 22) einen von der Oberfläche (1a) des Teils (1) ausgehenden Strahlungsfluss (36) zu erfassen und den Heizbereich (2, 22) und den Erfassungsbereich (3, 23) entlang eines festgelegten Abtastweges auf der Oberfläche (1a) des Teils (1) relativ zu verschieben, **dadurch gekennzeichnet, dass** zum Erfassen des vom Erfassungsbereich (3, 23) ausgehenden Strahlungsflusses (36), dessen Position mit der Position des Heizbereichs (2, 22) variiert, durch elektronische Mittel, darunter eine Einheit von Sensoren (19, 20), die eine Matrix von Sensoren in Form eines viereckigen oder rechteckigen Gitters mit Zeilen und Spalten an Sensoren ist, eine Gruppe (21) von Sensoren gewählt wird, die von mindestens einem Teil einer Zeile, Spalte oder Diagonale geeigneter Neigung der Einheit aus Sensoren (20) gebildet wird, deren Position so gewählt ist, dass ein vom Erfassungsbereich (3, 23) der Oberfläche (1a) des Teils (1) ausgehender Strahlungsfluss aufgenommen wird und der Rauschabstand der photothermischen Untersuchung erhöht wird, und dadurch dass elektronische Mittel (15, 16) zum Auswerten der Signale verwendet werden, sodass die Signale von jedem der Sensoren der Gruppe von Sensoren (21) unabhängig verarbeitet werden können.

2. Verfahren nach Anspruch 1, **dadurch gekennzeichnet, dass** der Heizbereich (22) und der Erfassungsbereich (23) die Form von Linien besitzen und beim Abtasten in einer senkrecht zu ihnen verlaufenden Richtung (24) verschoben werden.

3. Verfahren nach einem der Ansprüche 1 und 2, **dadurch gekennzeichnet, dass** die Verschiebung zwischen dem Heizbereich (22) und dem Erfassungsbereich (23) in der Abtastrichtung (24) gesteuert wird, indem mindestens ein Sensor in einer Abfolge von Sensoren (19) oder einer Reihe von Sensoren (21) in einer Matrix von Sensoren (20) gewählt wird.

4. Verfahren nach Anspruch 3, **dadurch gekennzeichnet, dass** die Größe und die Richtung der Verschiebung zwischen dem Heizbereich (22) und dem Erfassungsbereich (23) elektronisch gesteuert werden.

5. Verfahren nach Anspruch 1, **dadurch gekennzeichnet, dass** die Länge des Erfassungsbereichs (23) elektronisch gesteuert wird, indem die Anzahl an Sensoren der Gruppe (21) von Sensoren gewählt wird.

6. Verfahren nach einem der Ansprüche 3 und 4, bei dem das Abtasten nach Abtastzeilen (25) für jede der Abtastzeilen (25) in einer ersten Richtung erfolgt und dann in einer zweiten Richtung, die der ersten entgegengesetzt ist, und dass die Verschiebung zwischen dem Heizbereich (22) und dem Erfassungsbereich (23) durch die Wahl eines ersten Sensors oder einer ersten Reihe an Sensoren (21a) während des Abtastens in der ersten Abtastrichtung und durch die Wahl eines zweiten Sensors oder einer zweiten Reihe an Sensoren (21b) beim Verschieben des Heizbereichs (22) und des Erfassungsbereichs (23) in der zweiten Abtastrichtung gesteuert wird.

7. Verfahren nach Anspruch 6, **dadurch gekennzeichnet, dass** die Größe und die Richtung der Verschiebung zwischen dem Heizbereich (22) und dem Erfassungsbereich (23) zwischen zwei Abtastbewegungen in unterschiedlichen Richtungen verändert werden.

8. Verfahren nach einem der Ansprüche 1 bis 7, **dadurch gekennzeichnet, dass** die Verschiebung zwischen dem Heizbereich (22) und dem Erfassungsbereich (23) in einer Richtung stattfindet, die einen Winkel θ mit der Abtastrichtung (24) einschließt, wobei der Winkel θ zwischen 0 Grad und 360 Grad beträgt.

9. Verfahren nach einem der Ansprüche 1 bis 8, **dadurch gekennzeichnet, dass** der Heizbereich (22) oder der Erfassungsbereich (23) beim Abtasten in einer Richtung verschoben werden, die nicht parallel zu den Zeilen oder Spalten der Sensoreneinheit verläuft, welche eine Matrix (20) bildet, und dass angrenzende Sensoren der Sensorenmatrix (20) gewählt werden, die nach verschiedenen Spalten und Zeilen der Sensorenmatrix (20) angeordnet sind.

10. Verfahren nach einem der Ansprüche 1 bis 9, **dadurch gekennzeichnet, dass** das Mittel für die Zufuhr von Wärme auf die Oberfläche (1a) der Probe ein Laserstrahl (35) ist und dass die Fokussierung des Laserstrahls (35) und eines von der Oberfläche (1a) des Teils im Erfassungsbereich (23) ausgehenden Strahls (36) durch optische Heizmittel (39) und Erfassungsmittel (40) abhängig von einer Messung des Abstands zwischen den optischen Heizmitteln (39) und Erfassungsmitteln (40) und dem Erfassungsbereich (23) der Oberfläche (1a) des Teils (1), in dem die optische Untersuchung durchgeführt wird, während des Abtastens gesteuert wird.

11. Vorrichtung zur photothermischen Untersuchung eines Materials mit einem Mittel zum Erhitzen (26) eines Heizbereichs (22) der Oberfläche (1a) eines aus dem Material bestehenden Teils (1), Mitteln zum Erfassen (20) eines von der Oberfläche (1a) des Teils (1) in einem Erfassungsbereich (23) ausgehenden Strahlungsflusses (36), Mitteln zum Abtasten (10, 42, 46, 47, 49, 50, 51, 52, 53) zum Verschieben des Heizbereichs (2, 22) und des Erfassungsbereichs (3, 23) über die gesamte Oberfläche (1a) des Teils (1) sowie elektronische Mittel (15, 16) zum Auswerten von Signalen der Mittel zum Erfassen (20) des ausgehenden Strahlungsflusses, die es erlauben, ein thermografisches Bild der Oberfläche (1a) des Teils (1) zu konstruieren, **dadurch gekennzeichnet, dass** die Mittel zum Erfassen der Signale aus einer Gruppe (21) von Sensoren bestehen, die aus einer Sensoreneinheit gewählt werden, die eine Matrix (20) oder eine Abfolge (19) von Sensoren bildet, und dass die elektronischen Mittel (15, 16) zum Auswerten der Signale derart beschaffen sind, dass die Signale jedes der Sensoren der Gruppe von Sensoren (21) unabhängig verarbeitet werden können.

12. Vorrichtung nach Anspruch 11, bei der das Mittel zum Erhitzen (26) des Heizbereichs (22) eine Laserstrahlungsquelle ist, die optischen Mitteln (39) zugeordnet ist, welche es erlauben, den Laserstrahl (35), der aus der Strahlungsquelle (26) kommt, auf die Oberfläche (1a) des Teils (1) zu fokussieren, und bei welcher der vom Erfassungsbereich (23) der Oberfläche (1a) des Teils ausgehende Strahlungsfluss eine Infrarotstrahlung ist, die von Fokussierungsmitteln (13, 40) fokussiert wird, **dadurch gekennzeichnet, dass** sie außerdem eine Einrichtung (37) zum Messen des Abstands zwischen den optischen Mitteln (9, 39) zum Fokussieren des Laserstrahls und der Oberfläche (1a) des Teils (1) und des Abstands zwischen den Fokussierungsmitteln (13, 40) der Infrarotstrahlung und der Oberfläche (1a) des Teils (1) sowie Mittel zum Steuern der optischen Fokussierungsmittel anhand der Abstandsmessungen in Echtzeit aufweist.

13. Vorrichtung nach einem der Ansprüche 11 und 12, bei der das Mittel (26) zum Heizen des Heizbereichs (22) eine Laserstrahlungsquelle ist, die optischen Mitteln (39) zugeordnet ist, die den Laserstrahl (35) von der Strahlungsquelle (26) auf die Oberfläche (1a) des Teils (1) fokussieren, und bei welcher der vom Erfassungsbereich (23) der Oberfläche (1a) des Teils ausgehende Strahlungsfluss eine Infrarotstrahlung ist, die von Fokussierungsmitteln (13, 40) fokussiert wird, **dadurch gekennzeichnet, dass** sie darüber hinaus eine Einrichtung (37) zum Messen des Abstands zwischen den optischen Mitteln (39) zur Fokussierung des Laserstrahls und der Oberfläche (1a) des Teils (1) und des Abstands zwischen den Fokussierungsmitteln (13, 40) der Infrarotstrahlung und der Oberfläche (1a) des Teils (1) aufweist sowie Mittel zum Speichern der vom Messgerät (37) während des Abtastens der Oberfläche (1a) des Teils (1) gemessenen Abstände und zur zeitversetzten Steuerung der Fokussierungsmittel ausgehend von den gespeicherten Abständen.

14. Vorrichtung nach einem der Ansprüche 11 bis 13, **dadurch gekennzeichnet, dass** die Abtastmittel optische Mittel und Mittel zum mechanischen Verschieben (46, 47, 51, 53) des Teils (1) aufweisen.

15. Vorrichtung nach einem der Ansprüche 11 bis 13, **dadurch gekennzeichnet, dass** die Abtastmittel sowohl optische Mittel (42, 52) als auch Mittel zum mechanischen Verschieben (49, 50) von Mitteln zum Aussenden eines Strahls (35) zum Heizen der Oberfläche (1a) des Teils und zur Aufnahme eines von einem Erfassungsbereich (3, 23) der Oberfläche (1a) des Teils (1) ausgehenden Strahls (36) aufweisen.

16. Vorrichtung nach einem der Ansprüche 11 bis 13, **dadurch gekennzeichnet, dass** sie einen halb reflektierenden Strahlteiler (34) zum Ablenken eines Heizstrahls (35) auf die Oberfläche (1a) des Teils (1) und zum Übertragen eines vom Erfassungsbereich (3, 23) der Oberfläche (1a) der Probe ausgehenden Strahls (36) zu den Erfassungsmitteln (19, 20) aufweist.

17. Vorrichtung nach einem der Ansprüche 11 bis 16, bei der das Heizmittel eine Strahlungsquelle (26) ist, die optischen Mitteln zum Fokussieren (27) zugeordnet ist, **dadurch gekennzeichnet, dass** die optischen Mittel zum Fokussieren (27) dazu vorgesehen sind, die Strahlung der Quelle (26) in Form einer Linie oder gestreckten Ellipse (29) abzubilden und dass Mittel (30, 32) vorgesehen sind, um Länge und Ausrichtung der Linie oder gestreckten Ellipse (29) zu steuern.

18. Vorrichtung nach einem der Ansprüche 12 bis 17, **dadurch gekennzeichnet, dass** die Strahlungsquelle (26) mit den optischen Mitteln zum Fokussieren (39) über einen Lichtwellenleiter (45) verbunden ist.
